# EUROPÄISCHE PATENTANMELDUNG

(11) **EP 2 295 274 A1**
(43) Veröffentlichungstag der Anmeldung: **16.03.2011**
(21) Anmeldenummer: 10009340.0
(22) Anmeldetag: 08.09.2010
(51) Int. Cl.: B60K 7/00, B60K 17/16, B60K 17/346, B60K 17/356, H02K 7/116, F16H 48/08

(54) **Antriebseinheit für ein Kraftfahrzeug**

(30) Priorität: 10.09.2009 DE 102009040817
(71) Anmelder: Benteler Automobiltechnik GmbH, 33102 Paderborn (DE)
(72) Erfinder: Drabon, Rodscha, 33154 Salzkotten (DE); Hammelmaier, Ullrich, 33100 Paderborn (DE); Smatloch, Christian, Dr., 33100 Paderborn (DE)
(74) Vertreter: Griepenstroh, Jörg

(57) **Zusammenfassung**

Die Erfindung betrifft eine Antriebseinheit (1, 1A) für ein Kraftfahrzeug umfassend einen Elektromotor (2, 2A), der ein Sonnenrad (5, 26) eines Planetengetriebes (3, 3A) antreibt, wobei entweder Planetenräder (6) ortsfest angeordnet sind und wobei ein Hohlrad (8) des Planetengetriebes (3) zumindest mittelbarer Bestandteil eines Differentialkorbs (16) eines Differentialgetriebes (9) ist oder das Hohlrad ortsfest angeordnet und zumindest mittelbar Bestandteil des Gehäuses der Antriebseinheit ist und ein Planetenradträger zumindest mittelbarer Bestandteil des Differentialkorbes ist.

## Beschreibung

Die Erfindung betrifft eine Antriebseinheit für ein Kraftfahrzeug.

Im Bereich der Kraftfahrzeugindustrie werden immer häufiger Elektromotoren zum Antrieb von Kraftfahrzeugen eingesetzt. Dabei geht der Trend hin zu vollelektrisch angetriebenen Kraftfahrzeugen. Elektrische Radnabenmotoren haben z. B. den Vorteil, dass die Kraft dort erzeugt wird, wo sie benötigt wird, so dass es möglichst wenig mechanische Verluste gibt. Von Nachteil ist, dass die größeren, ungefederten Massen den Fahrkomfort einschränken und dass die Radnabenmotoren in der Summe teurer sind als ein Zentralmotor. Er bietet jedoch Vorteile hinsichtlich des Raumgewinns, da viele Komponenten nicht mehr um Motor, Tank und Getriebe herum geplant werden müssen. Wenn es sich bei Radnabenmotoren um permanenterregte Synchronmotoren handelt, sind zur Steuerung der Motoren mehrere kostenintensive Umrichter erforderlich. Ein Zentralmotor benötigt dementsprechend nur einen Umrichter. Ausgehend von diesem Stand der Technik liegt der Erfindung die Aufgabe zugrunde, einen Platz sparenden und robusten Aufbau einer Antriebseinheit für ein Kraftfahrzeug aufzuzeigen, welche die Nachteile der ungefederten Massen von Radnabenmotoren umgeht und nur einen Elektromotor für den Antrieb benötigt.

Diese Aufgabe wird durch eine Antriebseinheit für ein Kraftfahrzeug mit den Merkmalen des Patentanspruchs 1 gelöst.

Vorteilhafte Ausgestaltungen des Erfindungsgedankens sind Gegenstand der Unteransprüche.

Die erfindungsgemäße Antriebseinheit für ein Kraftfahrzeug umfasst einen Elektromotor, der ein Sonnenrad eines Planetengetriebes antreibt, wobei entweder Planetenräder dieses Planetengetriebes ortsfest angeordnet sind und ein Hohlrad des Planetengetriebes zumindest mittelbarer Bestandteil eines Differentialkorbs eines Differentialgetriebes ist oder das Hohlrad ortsfest angeordnet und zumindest mittelbarer Bestandteil des Gehäuses der Antriebseinheit ist und ein Planetenradträger zumindest mittelbarer Bestandteil des Differentialkorbs ist.

Es gibt also zwei Varianten, die gemeinsam haben, dass der Elektromotor über eine Antriebswelle das Sonnenrad des Planetengetriebes antreibt. Bei der ersten Variante sind die Planetenräder ortsfest und nahe am Elektromotor angeordnet, um die Antriebseinheit möglichst kompakt zu gestalten. Hierzu können die Planetenräder beispielsweise unmittelbar über einen Planetenradträger an einer Innenwand des Gehäuses der Antriebseinheit angeordnet sein. Denkbar ist es auch, den Planetenradträger und das Gehäuse einstückig auszuführen.

Die ortsfesten Planetenräder wiederum treiben das Hohlrad des Planetengetriebes an, welches gleichzeitig zumindest mittelbarer Bestandteil des Differentialkorbs des Differentialgetriebes ist. Zumindest mittelbarer Bestandteil bedeutet, dass das Hohlrad auch unmittelbarer Bestandteil des Differentialkorbs sein kann. Als unmittelbarer Bestandteil ist das Planetengetriebe mit dem Differentialkorb einstückig ausgebildet. Im Grunde ist in diesem Fall eine Innenverzahnung am Differentialkorb vorhanden, die als Hohlrad des Planetengetriebes dient, so dass das Planetengetriebe noch im Differentialkorb ausgebildet ist. Die Alternative stellt ein Zahnkranz mit einer Innenverzahnung dar, welcher mit dem Differentialkorb verbunden ist. Ein solcher Zahnkranz bzw. ein solches Hohlrad ist somit als mittelbarer Bestandteil des Differentialkorbs zu sehen, da er nicht einstückig mit dem Differentialkorb ausgebildet ist. Aber auch in diesem Fall ergibt sich eine unmittelbare räumliche Nähe, da der Differentialkorb mit dem Hohlrad eine Baueinheit bildet, so dass der Differentialkorb die Schnittstelle zum Planetengetriebe ist, und zwar ohne Zwischenwellen, welche die Distanz zwischen dem Hohlrad und dem Differentialgetriebe vergrößern würden.

Die zweite erfindungsgemäße Variante sieht ein ortsfestes Hohlrad vor, das zumindest mittelbarer Bestandteil des Gehäuses der Antriebseinheit ist, wobei ein Planetenradträger zumindest mittelbarer Bestandteil des Differentialkorbs ist. Auch hierbei ist der Differentialkorb die Schnittstelle zum Planetengetriebe.

Anders als in der ersten Ausführungsform wird in der zweiten Ausführungsform der Differentialkorb durch die Bewegung des Planetenradträgers angetrieben, wobei sich die Planetenräder relativ zu der Innenverzahnung des ortsfesten Hohlrades bewegen.

Ist das Hohlrad zumindest mittelbarer Bestandteil des Gehäuses der Antriebseinheit heißt das beispielsweise, dass das Hohlrad als separates Bauteil an einer Innenwand des Gehäuses befestigt sein kann. Ebenso ist es möglich, das Gehäuse mit dem Hohlrad einstückig auszuführen. Das bedeutet, dass das Gehäuse der Antriebseinheit entlang seiner Innenwand eine umlaufende Innenverzahnung aufweist.

Die Planetenräder sind über ihre Lagerzapfen an einem Planetenradträger angeordnet. Dieser ist zumindest mittelbarer Bestandteil des Dififerentialkorbs, was bedeutet, dass der Planetenradträger mit dem Differentialkorb einstückig ausgeführt sein kann. Zum Beispiel können Lagerzapfen für die Planetenräder an einer Stirnseite des Differentialkorbs angeordnet sein. Somit ist der Planetenradträger, der gewissermaßen durch die Lagerzapfen gebildet wird, unmittelbarer Bestandteil des Differentialkorbs.

Alternativ kann der Planetenradträger ein eigenes Bauteil sein und direkt am Differentialkorb festgelegt sein. Auch in diesem Fall ergibt sich eine unmittelbare räumliche Nähe zwischen den Planetenrädern und dem Differentialkorb.

Mit der erfindungsgemäßen Anordnung kann eine kompakte Antriebseinheit geschaffen werden, die nicht nur Platz sparend ist, sondern aufgrund des Entfalls von Verbindungswellen zwischen Motor, Getriebe und Differential auch ein relativ geringes Gewicht besitzt. Zudem ist es möglich, den Elektromotor, das Planetengetriebe und das Differentialgetriebe in einem gemeinsamen Gehäuse unterzubringen, so dass sich insgesamt ein sehr robuster Aufbau ergibt, der eine solche Antriebseinheit auch für den Einsatz unter härteren Belastungen qualifiziert.

Das Differentialgetriebe ist insbesondere ein Kegeldifferentialgetriebe, wobei der Differentialkorb über ein oder mehrere Ausgleichskegelräder mit Kegelrädern der Abtriebsachsen des Differentialgetriebes in Eingriff steht und diese antreibt.

In einer vorteilhaften Ausgestaltung ist die Antriebswelle des Elektromotors als Hohlwelle ausgestaltet. Diese Ausgestaltung ermöglicht es, eine Abtriebsachse des Differentialgetriebes innerhalb der als Hohlwelle ausgestalteten Antriebswelle des Elektromotors anzuordnen. Dadurch und durch die direkte Anordnung der Planetenräder am Elektromotor kann die Antriebseinheit sehr kompakt gestaltet werden.

Vorzugsweise weist der Elektromotor einen runden Querschnitt auf, welcher in seinem äußeren Durchmesser etwa dem äußeren Durchmesser des Hohlrades abgestimmt ist. Das Gehäuse kann so ebenfalls einen runden Querschnitt aufweisen und ist dementsprechend zylindrisch gestaltet. An den Stirnseiten des Gehäuses der Antriebseinheit können Stirnplatten angeordnet sein, mit welchen die Antriebseinheit im Kraftfahrzeug befestigt werden kann. Durch diese zentrale Befestigung des Motors, des Getriebes und des Differentialgetriebes kann der Materialeinsatz für üblicherweise separate Gehäuse reduziert und die Anbringung vereinfacht werden.

Das Differentialgetriebe kann als Achsdifferentialgetriebe zwischen den Rädern einer Achse dienen. Es besteht aber auch die Möglichkeit, das Differentialgetriebe als Längsdifferentialgetriebe zwischen den angetriebenen Achsen eines Kraftfahrzeugs anzuordnen.

Die Erfindung wird nachfolgend anhand eines in den Figuren dargestellten Ausführungsbeispiels näher beschrieben. Es zeigen:
- Figur 1: einen Längsschnitt durch eine erfindungsgemäße Antriebseinheit;
- Figur 2: einen Längsschnitt durch eine zweite erfindungsgemäße Antriebseinheit;
- Figur 3: eine perspektivische Ansicht einer Antriebseinheit und
- Figuren 4a bis 4d: schematische Darstellungen einer möglichen Anordnung der Antriebseinheit.

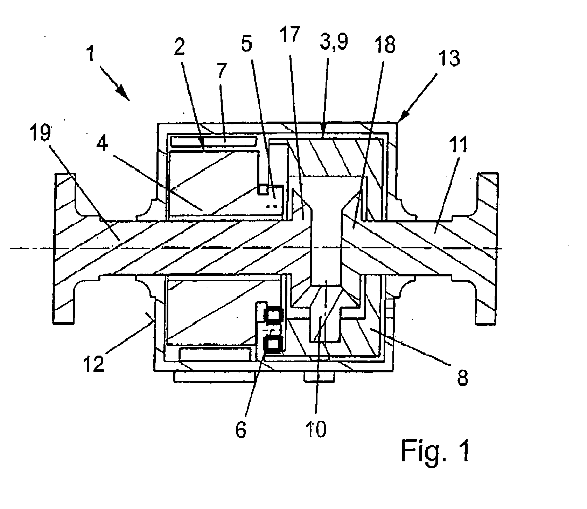

Figur 1 zeigt eine erste erfindungsgemäße Ausführung einer Antriebseinheit 1 für ein Kraftfahrzeug. Die Antriebseinheit 1 weist einen Elektromotor 2 auf und ein dem Elektromotor 2 benachbartes Planetengetriebe 3. Die Antriebswelle 4 des Elektromotors 2 ist als Hohlwelle ausgestaltet. Über die Antriebswelle 4 ist der Elektromotor 2 mit einem Sonnenrad 5 des Planetengetriebes 3 gekoppelt und treibt dieses an. Das Sonnenrad 5 steht mit Planetenrädern 6 in Eingriff. Dabei sind die Planetenräder 6 ortsfest in unmittelbarer Nähe eines Stators 7 des Elektromotors 2 am Gehäuse 13 angeordnet. Die Planetenräder 6 stehen wiederum mit einem, dem Elektromotor 2 gegenüberliegenden Hohlrad 8 des Planetengetriebes 3 in Eingriff und treiben das Hohlrad 8 durch Übersetzen der Drehbewegung des Sonnenrades 5 an.

Das Hohlrad 8 ist einteiliger Bestandteil eines Differentialkorbs 16 des Differentialgetriebes 9 der Antriebseinheit 1 und steht über ein Ausgleichskegelrad 10 mit Kegelrädern 17, 18 an den Abtriebsachsen 11, 19 des Differentialgetriebes 9 in Eingriff.

Eine in der Bildebene linke Abtriebsachse 19 des Differentialgetriebes 9 ist durch die als Hohlwelle ausgestaltete Antriebswelle 4 des Elektromotors 2 geführt. Das Differentialgetriebe 9 mit Planetengetriebe 3 und Elektromotor 2 ist in einem gemeinsamen Gehäuse 13 angeordnet.

Die Abtriebsachsen 11 des Differentialgetriebes 9 stehen einander fluchtend gegenüber. Dabei treten die Abtriebsachsen 11, 19 an den Stirnseiten 12 des Gehäuses 13 der Antriebseinheit 1 aus. Sie sind an den Stirnseiten 12 des Gehäuses 13 an vorstehenden Lagerungen 20, 21 in nicht näher dargestellter Weise gelagert.

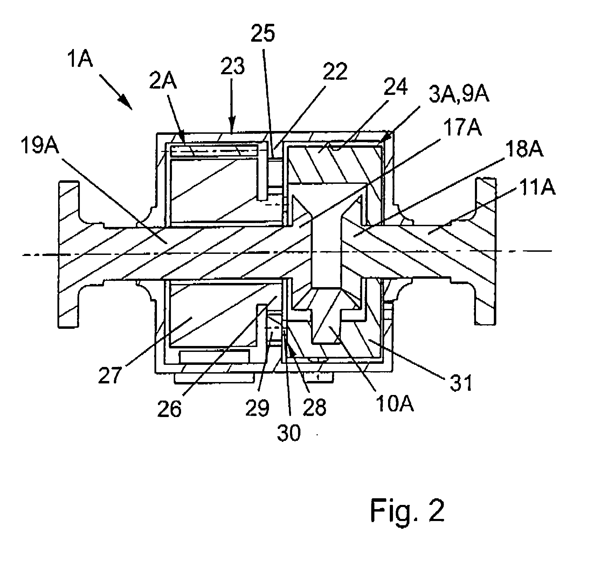

Figur 2 zeigt die zweite erfindungsgemäße Ausführung der Antriebseinheit 1A. Hierbei ist ein Hohlrad 22 einstückiger Bestandteil eines Gehäuses 23 der Antriebseinheit 1A, so dass an einer Innenwand 24 des Gehäuses 23 eine Innenverzahnung 25 des Hohlrads 22 angeordnet ist. Das Sonnenrad 26 des Planetengetriebes 3A wird über den Rotor 27 des Elektromotors 2A analog zum ersten Ausführungsbeispiel angetrieben und treibt damit an einem Planetenradträger 28 angeordnete Planetenräder 29 an. Dabei sind die Planetenräder 29 über ihre Lagerzapfen 30 am Planetenradträger 28 angeordnet. Der Planetenradträger 28 ist der stirnseitige Teil eines Differentialkorbs 31 des Differentialgetriebes 9A. Das Sonnenrad 26 treibt die Planetenräder 29 an. Diese rotieren um den Lagerzapfen 30 und bewegen sich entlang der Innenverzahnung 25 des Gehäuses. Über den fest mit dem Differentialkorb 31 verbundenen Planetenradträger 28 wird die umlaufende Bewegung der Planetenräder 29 unmittelbar auf den Differentialkorb 31 und somit über das Ausgleichskegelrad 10A auf die Kegelräder 17A, 18A der Abtriebsachsen 11A, 19A des Differentialgetriebes 9A übertragen.

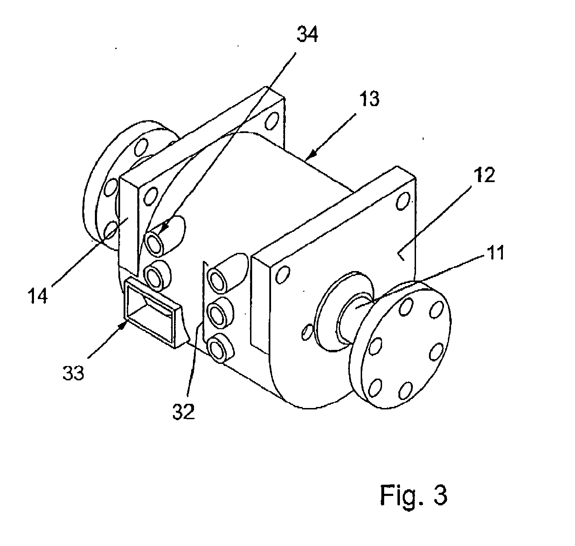

Die perspektivische Darstellung in Figur 3 zeigt die äußere Ausgestaltung des Gehäuses 13 sowie die aus dem Gehäuse 13 herausragenden Abtriebsachsen 11, 19. Das Gehäuse 13 weist einen kreiszylindrischen Querschnitt auf. Benachbart den Stirnseiten 12 des Gehäuses 13 sind Stirnplatten 14 angeordnet, welche zur Festlegung der Antriebseinheit 1 im Kraftfahrzeug vorgesehen sind. Die Stirnplatten 14 sind umfangsseitig des kreiszylindrischen Gehäuses 13 angeordnet und schließen mit den Stirnseiten 12 ab. Sie weisen in die gleiche Richtung und erstrecken sich über einen Winkelbereich von 180°, wobei sie bei 0°, 90° und 180° jedoch nicht über den Umfang des Gehäuses 13 hinausragen. Dadurch besitzt das Gehäuse 13 in der Stirnansicht eine U-förmige Kontur.

Am Gehäuse 13 der Antriebseinheit 1 sind umfangsseitig Anschlüsse 32, 33, 34 vorgesehen. Hierbei handelt es sich um Leistungsanschlüsse 32 zum Antrieb des Elektromotors. Des Weiteren sind Anschlüsse 33 für die Steuerelektronik und die Sensorik vorgesehen sowie Anschlüsse 34 zur Zu- und Abfuhr des Kühlmediums.

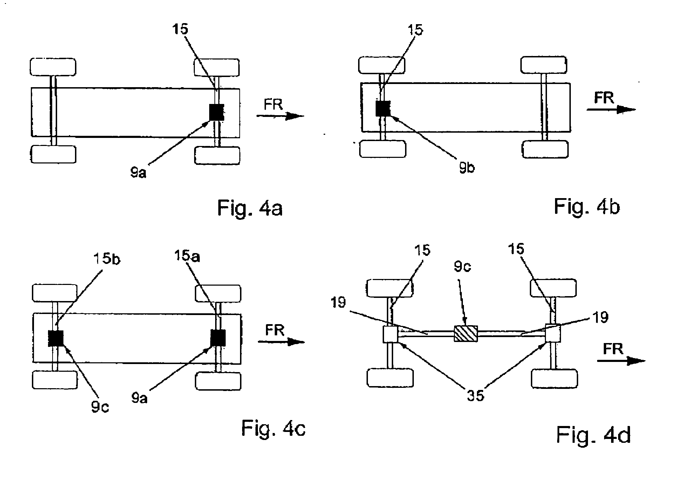

Die Figuren 4a bis 4d zeigen verschiedene schematische Darstellungen der Antriebseinheit im Einsatz als Differentialgetriebe 9 mit der Antriebseinheit.

Hierbei zeigt Figur 4a den Einsatz einer Antriebseinheit als Achsdifferentialgetriebe 9a an einer Achse 15 eines Kraftfahrzeugs. Dabei kann die Antriebseinheit entweder wie in Figur 4a an der Vorderachse oder wie in Figur 4b an der Hinterachse angeordnet sein. FR verdeutlicht die Fahrtrichtung.

Figur 4c zeigt eine Variante, bei welcher Antriebseinheiten als Achsdifferentiaigetriebe 9a, 9b sowohl an der Vorderachse 15a als auch an der Hinterachse 15b angeordnet sind.

Darüber hinaus besteht wie in Figur 4d dargestellt, ebenfalls die Möglichkeit, die Antriebseinheit als Längsdifferentialgetriebe 9c einzusetzen. Hierbei ist

Längsdifferentialgetriebe 9c zwischen zwei Achsen 15 eines Kraftfahrzeugs angeordnet und über seine Abtriebsachsen 19 mit diesen über ein weiteres Differential 35 gekoppelt.

### Bezugszeichen:

- 1 -: Antriebseinheit
1A - Antriebseinheit
- 2 -: Elektromotor
2A - Elektromotor
- 3 -: Planetengetriebe
3A - Planetengetriebe
- 4 -: Antriebswelle
- 5 -: Sonnenrad
- 6 -: Planetenrad
- 7 -: Stator
- 8 -: Hohlrad
- 9 -: Differentialgetriebe
9A - Differentialgetriebe
9a - Achsdifferentialgetriebe
9b - Achsdifferentialgetriebe
9c - Längsdifferentialgetriebe
- 10 -: Ausgleichskegelrad
10A - Ausgleichskegelrad
- 11 -: Abtriebsachse
11A - Abtriebsachse
- 12 -: Stirnseiten v. 13
- 13 -: Gehäuse
- 14 -: Stirnplatten
- 15 -: Achsen
- 15a -: Vorderachse
- 15b -: Hinterachse
- 16 -: Differentialkorb
- 17 -: Kegelrad
17A - Kegelrad
- 18 -: Kegelrad
18A - Kegelrad
- 19 -: Abtriebsachse
19A - Abtriebsachse
- 20 -: Lagerung
- 21 -: Lager
- 22-: Hohlrad
- 23 -: Gehäuse
- 24 -: Innenwand v. 23
- 25 -: Innenverzahnung
- 26 -: Sonnenrad
- 27 -: Rotor
- 28 -: Planetenradträger
- 29 -: Planetenräder
- 30 -: Lagerzapfen
- 31 -: Differentialkorb
- 32 -: Leistungsanschluss
- 33 -: Anschluss für Steuerelektronik und Sensorik
- 34 -: Anschlüsse für Kühlmedium
- 35 -: Differential

- FR -: Fahrtrichtung

## Patentansprüche

1. Antriebseinheit für ein Kraftfahrzeug umfassend einen Elektromotor (2, 2A), der ein Sonnenrad (5, 26) eines Planetengetriebes (3) antreibt, wobei entweder
- Planetenräder (6) des Planetengetriebes (3) ortsfest angeordnet sind und ein Hohlrad (8) des Planetengetriebes (3) zumindest mittelbarer Bestandteil eines Differentialkorbs (16) eines Differentialgetriebes (9) ist oder
- das Hohlrad (22) ortsfest angeordnet und zumindest mittelbarer Bestandteil eines Gehäuses (23) der Antriebseinheit (1A) ist, wobei ein Planetenradträger (28) zumindest mittelbarer Bestandteil des Differentialkorbs (31) ist.

2. Antriebseinheit nach Anspruch 1, **dadurch gekennzeichnet, dass** das Differentialgetriebe (9, 9A) ein Kegeldifferentialgetriebe ist.

3. Antriebseinheit nach Anspruch 1 oder 2, **dadurch gekennzeichnet, dass** eine Antriebswelle (4) des Elektromotors (2, 2A) als Hohlwelle ausgestaltet ist, wobei eine Abtriebsachse (19, 19A) des Differentialgetriebes (9, 9A) innerhalb der Antriebswelle (4) verläuft.

4. Antriebseinheit nach einem der Ansprüche 2 bis 3, **dadurch gekennzeichnet, dass** die Planetenräder (6, 29) unmittelbar benachbart zu einem Stator (7) des Elektromotors (2, 2A) angeordnet sind.

5. Antriebseinheit nach einem der Ansprüche 2 bis 4, **dadurch gekennzeichnet, dass** der Elektromotor (2, 2A) zusammen mit dem Planetengetriebe (3, 3A) und dem Differentialgetriebe (9, 9A) in einem gemeinsamen Gehäuse (13, 23) angeordnet ist.

6. Antriebseinheit nach einem der Ansprüche 2 bis 5, **dadurch gekennzeichnet, dass** das Differentialgetriebe (9, 9A) ein Achsdifferentialgetriebe (9a) ist.

7. Antriebseinheit nach einem der Ansprüche 2 bis 5, **dadurch gekennzeichnet, dass** das Differentialgetriebe (9, 9A) ein Längsdifferentialgetriebe (9b) ist, das zwischen angetriebenen Achsen (15) eines Kraftfahrzeugs angeordnet ist.
